# EUROPÄISCHE PATENTSCHRIFT

(11) **EP 3 388 256 B1**
(45) Veröffentlichungstag und Bekanntmachung des Hinweises auf die Patenterteilung: **06.11.2019**
(21) Anmeldenummer: 18155019.5
(22) Anmeldetag: 05.02.2018
(51) Int. Cl.: B60C 11/03

(54) **FAHRZEUGLUFTREIFEN**
PNEUMATIC TYRES FOR A VEHICLE
PNEUMATIQUE DE VÉHICULE

(30) Priorität: 13.04.2017 DE 102017206383
(43) Veröffentlichungstag der Anmeldung: 17.10.2018
(73) Patentinhaber: Continental Reifen Deutschland GmbH, 30165 Hannover (DE)
(72) Erfinder: Rittweger, Stefan, 30826 Garbsen (DE); Lorchheim, Andrea, 30823 Garbsen (DE); Roeger, Bernhard, 30823 Garbsen (DE)
(74) Vertreter: Finger, Karsten

(56) Entgegenhaltungen:
- EP-A1- 2 818 333
- EP-A1- 3 124 290
- WO-A1-2016/125814
- DE-A1-102015 219 434

## Beschreibung

Die Erfindung betrifft einen Fahrzeugluftreifen in Radialbauart mit einem Laufstreifen mit zumindest einer schulterseitigen Profilrippe, welche mit über den seitlichen Rand der Bodenaufstandsfläche des Laufstreifens hinausverlaufenden Querrillen versehen ist, wobei jede Querrille einen Rillengrund und Rillenwände sowie innerhalb der Bodenaufstandsfläche einen Hauptabschnitt mit parallel zueinander verlaufenden Rillenkanten aufweist, wobei der Hauptabschnitt zwischen den Rillenwänden eine Breite von 1,5 mm bis 10,0 mm aufweist,
wobei an zumindest einer Rillenwand eine zur Rillenkante verlaufende Fase angesetzt ist und wobei jede Querrille außerhalb der Bodenaufstandsfläche unter kontinuierlicher Verringerung ihrer Tiefe als flächige Vertiefung ausläuft, wobei jede Vertiefung in Umfangsrichtung an ihrer breitesten Stelle eine Breite aufweist, welche um mindestens 40% größer ist als die Breite des Hauptabschnittes der Querrille.

Ein derartiger Fahrzeugluftreifen ist beispielsweise aus der DE 10 2015 219 434 A1 bekannt. Der Laufstreifen des Fahrzeugluftreifens weist eine schulterseitige Profilrippe mit in Draufsicht bogenförmig verlaufenden Querrillen auf, deren an der Laufstreifenperipherie befindlichen Rillenkanten jeweils mit einer Fase versehen.

Aus der EP 2 818 333 A1 ist ein Fahrzeugluftreifen bekannt, welcher einen Laufsteifen mit bei den Schulterbereichen verlaufenden Querrillen aufweist, welche an der zur jeweiligen Seitenwand verlaufenden Schulterflanke austreten. Ferner ist aus der EP 3 124 290 A1 ein Fahrzeugluftreifen mit einem Laufstreifen mit in einer schulterseitigen Profilrippe verlaufenden Querrillen bekannt, welche innerhalb der Bodenaufstandsfläche mindestens zwei aneinander anschließende Rillenabschnitte unterschiedlicher Tiefe aufweisen, wobei die Tiefe der Rillenabschnitte stufenweise Richtung Laufstreifenrand zunimmt. Darüber hinaus offenbart die EP 3 238 959 A1 einen Fahrzeugluftreifen mit einem Laufstreifen mit schulterseitigen Profilrippen mit Querrillen, deren an der Laufstreifenperipherie befindliche Rillenkanten mit Fasen versehen sind.

Es ist somit üblich, Rillenwände von Querrillen in schulterseitigen Profilrippen mit zu den Rillenkanten verlaufenden Fasen, welche zur radialen Richtung geneigte Schrägflächen sind, zu versehen. Derartige Fasen sind für die Bremseigenschaften auf trockener Fahrbahn von Vorteil, bewirken jedoch oft gleichzeitig eine Verstärkung des Abrollgeräusches.

Die Rillenkanten der schulterseitigen Querrillen verlaufen üblicherweise parallel zueinander und über den seitlichen Rand der Bodenaufstandsfläche hinaus. Im außerhalb der Bodenaufstandsfläche befindlichen Bereich der Querrillen, dem sogenannten "Off-Shoulder"-Bereich, laufen die Querrillen aus, sodass der Querrillenquerschnitt dort abnimmt. Beim Fahren von Kurven, insbesondere mit hoher Geschwindigkeit, verlagert sich die Bodenaufstandsfläche in Richtung der der Kurvenaußenseite zugewandten Außenseite des Laufstreifens, wodurch die betreffende schulterseitige Profilrippe auch im Off-Shoulder-Bereich mit dem Untergrund in Kontakt treten. Die in solchen Fahrsituationen durch die Verlagerung der Bodenaufstandsfläche plötzlich innerhalb der Bodenaufstandsfläche befindlichen Querrillenabschnitte mit geringen Querrillenquerschnitten führen beim Fahren auf nasser Fahrbahn zu einer erhöhten Aquaplaninggefahr.

Der Erfindung liegt daher die Aufgabe zugrunde, bei einem Fahrzeugluftreifen eingangs genannter Art, die Aquaplaninggefahr bei Kurvenfahrt auf nasser Fahrbahn zu verringern.

Die gestellte Aufgabe wird erfindungsgemäß dadurch gelöst,
dass die Fase(n) in Erstreckungsrichtung der Querrille einen Fasenhauptabschnitt und außerhalb der Bodenaufstandsfläche einen zumindest über den Großteil seiner Erstreckung breiter als der Fasenhauptabschnitt ausgeführten Fasenendabschnitt aufweist bzw. aufweisen,
wobei jeder Fasenendabschnitt an der Außenfläche der Profilrippe durch einen Kantenabschnitt seiner Rillenkante begrenzt ist, welcher zumindest eine die Querrille verbreiternde Knickstelle aufweist, und wobei jeder Fasenendabschnitt entlang der flächigen Vertiefung der Querrille ausläuft.

Die Knickstelle in der Rillenkante der Querrille, der Fasenendabschnitt sowie die flächige Vertiefung bewirken eine Vergrößerung des Querrillenquerschnittes im schulterseitigen Auslaufbereich der Querrillen. Dadurch kann auch bei Kurvenfahrt auf nasser Fahrbahn, d.h. unter Verlagerung der Bodenaufstandsfläche zur Kurvenaußenseite, Wasser besonders effektiv über den Rand des Laufstreifens hinaus abgeleitet werden. Da der Rillenquerschnitt im Off-Shoulder-Bereich gegenüber Ausführungen bei bekannten Reifen vergrößert ist, ist die Gefahr von Aquaplaning gegenüber diesen Reifen deutlich verringert. Dabei sorgen der Fasenendabschnitt und die seichte Vertiefung, welche die Querrille zur Laufstreifenaußenseite verbreitert, für eine gute Wasserableitung.

Gemäß einer bevorzugten Ausführungsvariante nimmt die Tiefe der Vertiefung an ihrem schulterseitigen Ende auf 0,0 mm bis 4,0 mm ab. Dadurch kann Wasser besonders verwirbelungsfrei im Off-Shoulder-Bereich abströmen.

Besonders vorteilhaft ist in diesem Zusammenhang, wenn, insbesondere bei einer Ausführung des Fahrzeugluftreifens für einen Personenkraftwagen, die Tiefe der Vertiefung an ihrem schulterseitigen Ende auf 0,5 mm bis 1,0 mm abnimmt.

Gemäß einer weiteren bevorzugten Ausführungsvariante ist die Breite der Vertiefung an ihrer breitesten Stelle um mindestens 50%, insbesondere um mindestens 65%, größer als die Breite des Hauptabschnittes der Querrille. Diese Maßnahme bewirkt eine besonders vorteilhafte Vergrößerung des Querrillenquerschnittes im schulterseitigen Auslaufbereich.

Für die Wasserableiteigenschaften im Off-Shoulder-Bereich ist es ferner vorteilhaft, wenn gemäß einer weiteren bevorzugten Ausführungsvariante der Fasenendabschnitt an seiner breitesten Stelle ein Breite von 1,5 mm bis 3,0 mm, insbesondere von mindestens 2,5 mm, aufweist.

Bei einer weiteren bevorzugten Ausführungsvariante weist der der Fasenhauptabschnitt eine Breite von 0,5 mm bis 1,5 mm auf. Diese Maßnahme ist für gute Bremseigenschaften auf trockener Fahrbahn von Vorteil.

Besonders bevorzugt ist ferner eine Ausführung, bei welcher der Fasenendabschnitt an der Außenfläche der schulterseitigen Profilrippe durch einen in Draufsicht geschwungenen Kantenabschnitt der Rillenkante begrenzt ist. Insbesondere ist der geschwungene Kantenabschnitt in Draufsicht langgestreckt S-förmig geschwungen.

Für eine gute Wasserableitung im Off-Shoulder-Bereich ist es auch von Vorteil, wenn die flächigen Vertiefungen der Querrillen in axialer Richtung langgestreckt sind und bis zur Seitenwand verlaufen.

Für die Stabilität der schulterseitigen Profilrippe ist es günstig, wenn an der zweiten Rillenwand der Querrille ebenfalls eine zur Rillenkante verlaufende Fase angesetzt ist. Auch diese Fase kann die Wasserableitung in den Off-Shoulder-Bereich unterstützen, wenn sie entlang der flächigen Vertiefung der Querrille ausläuft.

Ferner ist es zur Sicherstellung der erwähnten Eigenschaften von Vorteil, wenn die vorgesehene(n) Fase(n), im Querschnitt betrachtet, zur radialen Richtung unter einem konstanten Winkel von 40° bis 50°, insbesondere von 43° bis 47°, verlaufen.

Gemäß einer bevorzugten Ausführungsvariante weisen die Querrillen in Draufsicht eine löffelartige Gestalt auf, wobei die Vertiefungen jeweils den Löffelboden bilden.

Ist der Fahrzeugluftreifen für Personenkraftwagen vorgesehen, ist es von Vorteil, wenn die Breite des Hauptabschnittes zwischen den Rillenwänden für Sommerreifen bis zu 5,0 mm beträgt und für Winterreifen 6,0 mm bis 8,0 mm beträgt. Sommerreifen weisen häufig als Hautentwässerungsrillen wirkende Umfangsrillen auf, sodass die Querrillen unter Beibehaltung eines guten Wasserdrainagevermögens etwas schmäler ausgeführt werden können. Dies ist für die Bremseigenschaften auf trockner Fahrbahn von Vorteil und reduziert das Abrollgeräusch des Sommer-Reifens. Winterreifen weisen häufig einen Laufstreifen mit einem "gepfeilten" Profil auf, sind also mit V-förmig zueinander verlaufenden Schrägrillen versehen, was für den Schneegriff von Vorteil ist. In diesem Fall sind also keine als Hauptentwässerungsrillen wirkende Umfangsrillen vorhanden, sodass das Wasserdrainagevermögen durch die tieferen schulterseitigen Querrillen verbessert ist.

Ist der Fahrzeugluftreifen für einen Geländewagen vorgesehen, beträgt die Breite des Hauptabschnittes zwischen den Rillenwänden vorzugsweise bis zu 10,0, was für das Fahren auf erdigem und matschigem Untergrund von Vorteil ist. Das Abrollgeräusch ist bei solchen Reifen von geringerer Bedeutung.

Weitere Merkmale, Vorteile und Einzelheiten der Erfindung werden nun anhand der Zeichnung, die schematisch Ausführungsbeispiele der Erfindung zeigt, näher beschrieben. Dabei zeigen
Fig. 1 eine Draufsicht auf einen Umfangsabschnitt einer schulterseitigen Profilrippe eines Laufstreifens eines Fahrzeugluftreifens mit einer ersten Ausführungsvariante der Erfindung,
Fig. 2 eine Schrägansicht auf einen Umfangsabschnitt der Profilrippe gemäß Fig. 1,
Fig. 3 einen Schnitt entlang der Linie III-III der Fig. 1,
Fig. 4 einen Schnitt entlang der Linie IV-IV der Fig. 1 und
Fig. 5 eine Draufsicht auf einen Umfangsabschnitt einer weiteren schulterseitigen Profilrippe mit einer zweiten Ausführungsvariante der Erfindung.

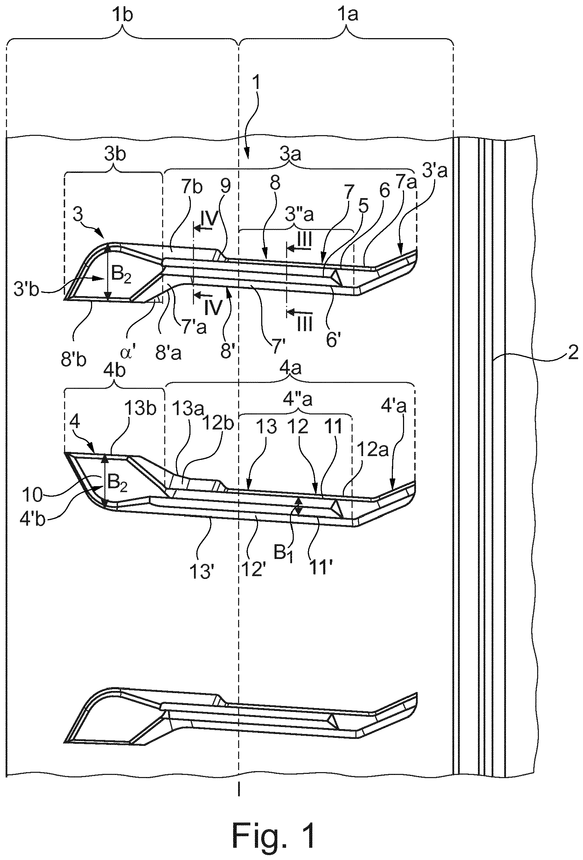

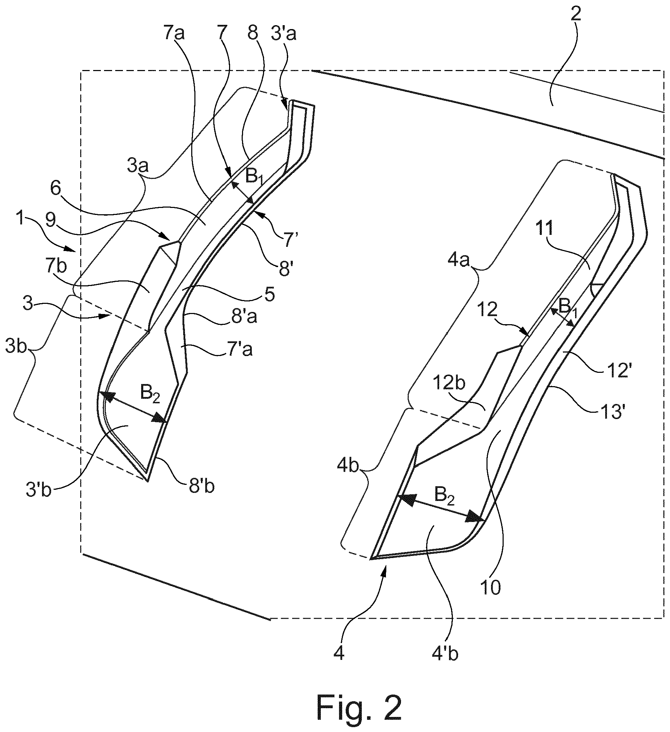

Fig. 1 und Fig. 2 zeigen eine schulterseitige Profilrippe 1 eines Laufstreifens eines Fahrzeugluftreifens in Radialbauart für Personenkraftwagen, Vans, Light-Trucks oder Geländewagen. Laufstreifeninnenseitig ist die Profilrippe 1 von einer Umfangsrille 2 begrenzt. In der zweiten in Fig. 1 und Fig. 2 nicht gezeigten Laufstreifenschulter kann eine zur Profilrippe 1 analog ausgeführte Profilrippe verlaufen. Der laufstreifenaußenseitige Rand der Bodenaufstandsfläche des Laufstreifens ist in Fig. 1 durch eine gestrichelte Linie 1 gekennzeichnet, wobei die Bodenaufstandsfläche dem statisch ermittelten Footprint -Last bei 70 % der maximalen Tragfähigkeit bei einem Innendruck von 85 % nach E.T.R.T.O.-Norm- entspricht. Die Bodenaufstandsfläche endet in bekannter Weise im Bereich der schulterseitigen Profilrippe 1, sodass diese einen innerhalb der Bodenaufstandsfläche befindlichen Umfangsabschnitt 1a und einen außerhalb der Bodenaufstandsfläche befindlichen Schulterabschnitt 1b im "Off-Shoulder"-Bereich aufweist.

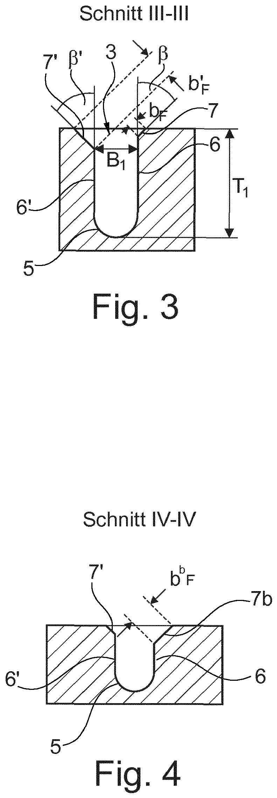

Die schulterseitige Profilrippe 1 ist über ihre Umfangserstreckung mit einer Vielzahl von über den Rand der Bodenaufstandsfläche hinausverlaufenden und daher sowohl im Umfangsabschnitt la als auch im Schulterabschnitt 1b verlaufenden Querrillen 3, 4 versehen, welche der Profilrippe 1 eine blockartige Struktur verleihen, in Umfangsrichtung abwechselnd aufeinanderfolgen, jeweils komplett innerhalb der Profilrippe 1 verlaufen und laufstreifeninnenseitig in einem Abstand von beispielsweise 5,0 mm vor der die Profilrippe 1 begrenzenden Umfangsrille 2 enden. Die Querrillen 3, 4 erstrecken sich in Draufsicht im Wesentlichen parallel zueinander sowie zur axialen Richtung oder unter einem von der axialen Richtung um bis zu 15° abweichenden Winkel. An ihrer tiefsten Stelle weist jede Querrille 3, 4 in radialer Richtung eine Tiefe T₁ (in Fig. 3 für eine Querrille 3 gezeigt) von 3,0 mm bis 12,0 mm auf.

Jede Querrille 3 weist einen abschnittweise innerhalb und außerhalb der Bodenaufstandsfläche verlaufenden Rillenabschnitt 3a und einen an das laufstreifenaußenseitige Ende des Rillenabschnittes 3a anschließenden und daher im Schulterabschnitt 1b befindlichen Auslaufabschnitt 3b auf. Der Rillenabschnitt 3a erstreckt sich über zumindest 50%, insbesondere über zumindest 60%, der in Rillenlaufrichtung ermittelten Erstreckungslänge der Querrille 3 und weist einen zumindest den Großteil seiner Erstreckung einnehmenden und innerhalb der Bodenaufstandsfläche befindlichen Hauptabschnitt 3"a sowie beim gezeigten Ausführungsbeispiel einen in Draufsicht unter einem Winkel zur axialen Richtung verlaufenden abgeknickten laufstreifeninnenseitigen Endabschnitt 3'a auf.

Wie Fig. 1 und Fig. 3 zeigen, ist jede Querrille 3 durch einen Rillengrund 5, zwei Rillenwände 6, 6' und zwei an den radial äußeren Enden der Rillenwände 6, 6' angesetzten Fasen 7, 7' begrenzt. Die Rillenwände 6, 6' schließen im Rillenabschnitt 3a an den Rillengrund 5 an und verlaufen beim gezeigten Ausführungsbeispiel in radialer Richtung, alternativ unter einem von der radialen Richtung vorzugsweise um bis zu 5° abweichenden Winkel. Wie insbesondere Fig. 2 für die Rillenwand 6 zeigt, laufen die Rillenwände 6, 6' jeweils am Auslaufabschnitt 3b aus. Der Hauptabschnitt 3"a der Querrille 3 weist zwischen den Rillenwänden 6, 6' eine Breite B₁ (Fig. 3) auf, welche am radial inneren Ende der am tiefsten in die Querrille 3 hineinragenden Fase 7, 7', beim gezeigten Ausführungsbeispiel der Fase 7', ermittelt wird und 1,5 mm bis 10,0 mm beträgt. Bei Laufstreifen für PKW-Sommerreifen beträgt die Breite B₁ vorzugsweise bis zu 5,0 mm, bei Laufstreifen für PKW-Winterreifen, welche meist ein "gepfeiltes" Profil aufweisen, 6,0 mm bis 8,0 mm. Ist der Laufstreifen für einen Off-Road-Reifen vorgesehen beträgt die Breite B₁ bis zu 10,0 mm.

Gemäß Fig. 1 und Fig. 2 ist jeder Auslaufabschnitt 3b im Wesentlichen von einer zur nicht dargestellten Seitenwand des Reifens unter kontinuierlicher Verringerung ihrer Tiefe auslaufenden seichten Vertiefung 3'b gebildet. Die Vertiefung 3'b weist in Umfangsrichtung an ihrer breitesten Stelle eine an der Außenfläche des Schulterabschnittes 1b ermittelte Breite B₂ auf, welche um 40%, insbesondere um mindestens 50%, größer als die Breite B₁ im Hauptabschnitt 3"a (Fig. 3). An ihrem schulterseitigen Ende weist die Vertiefung 3'b in radialer Richtung eine Tiefe von 0,0 mm bis 4,0 mm auf. Die Vertiefung 3'b kann daher zur Außenfläche des Schulterabschnittes 1b auslaufen. Bei Laufstreifen für PKW-Reifen beträgt die Tiefe der Vertiefung 3'b vorzugsweise 0,5 mm bis 1,0 mm. Ist der Laufstreifen für einen Off-Road-Reifen (Geländewagen) vorgesehen beträgt die Tiefe vorzugswese bis zu 4,0 mm.

An der Außenfläche der Profilrippe 1 ist jede Querrille 3 in Umfangsrichtung durch zwei Rillenkanten 8, 8' begrenzt. Die Rillenkante 8' begrenzt die an der Rillenwand 6' ausgebildete Fase 7', verläuft über den Großteil der Erstreckung des Rillenabschnittes 3a in Erstreckungsrichtung der Querrille 3 und weist einen sowohl abschnittsweise im Rillenabschnitt 3a als auch abschnittsweise im Auslaufabschnitt 3b verlaufenden und zur Querrichtung geneigten Kantenabschnitt 8'a auf. Der geneigte Kantenabschnitt 8'a verläuft in Draufsicht derart unter einem Winkel α' von 20° bis 45° zur Querrichtung, dass sich die Querrille 3 im Auslaufabschnitt 3b, wie bereits erläutert, verbreitert. An das laufstreifenaußenseitige Ende des geneigten Kantenabschnittes 8'a schließt ein Kantenendabschnitt 8'b an, welcher in Draufsicht in oder im Wesentlichen in Erstreckungsrichtung der Querrille 3 verläuft. Die Fase 7' verläuft über die gesamte Erstreckung der Rillenwand 6' sowie zur radialen Richtung unter einem konstanten Winkel β' (Fig. 3) von 40° bis 50°, insbesondere von 43° bis 47°, und weist innerhalb des Rillenabschnittes 3a über den Großteil ihrer Erstreckung eine konstante Breite b_{F}' (Fig. 3) von 0,5 mm bis 1,5 mm auf. Die Fase 7' weist ferner einen über das Ende der Rillenwand 6' hinausragenden, im Schulterabschnitt 1b der Profilrippe 1 verlaufenden Fasenendabschnitt 7'a auf, welcher an der Außenfläche der Profilrippe 1 durch den bereits erwähnten geneigten Kantenabschnitt 8'a begrenzt ist und im Auslaufabschnitt 3b zur Vertiefung 3'b und derart zum Rillengrund 5 der Querrille 3 verläuft (Fig. 1, Fig. 2).

Die Rillenkante 8 begrenzt die an der Rillenwand 6 angesetzte Fase 7. Die Fase 7 verläuft über die gesamte Erstreckung der Rillenwand 6 sowie zur radialen Richtung unter einem Winkel β (Fig. 3) von 40° bis 50°, insbesondere von 43° bis 47°, und setzt sich aus einem über den Großteil des Rillenabschnittes 3a verlaufenden Fasenhauptabschnitt 7a und einen vom Rillenabschnitt 3a in den Auslaufabschnitt 3b hinein- und im Schulterabschnitt 1b der Profilrippe 1 verlaufenden Fasenendabschnitt 7b zusammen. Der Fasenhauptabschnitt 7a weist eine Breite b_{F} (Fig. 3) von 0,5 mm bis 1,5 mm auf und erstreckt sich über zumindest 50%, insbesondere über zumindest 60%, der Erstreckungslänge des Rillenabschnittes 3a. Der Fasenendabschnitt 7b schließt beim gezeigten Ausführungsbeispiel über eine Knickstelle 9 der Rillenkante 8 an das laufstreifenaußenseitige Ende des Fasenhauptabschnittes 7a an und verläuft im Auslaufabschnitt 3b zur Vertiefung 3'b sowie insbesondere über eine Übergangsrundung zum Rillengrund 5. Ferner weist der Fasenendabschnitt 7b über den Großteil seiner Erstreckung eine konstante Breite b_{F}^{b} (Fig. 4) von 1,5 mm bis 3,0 mm auf. Der Fasenendabschnitt 7b läuft, wie Fig. 2 zeigt, an der erwähnten Übergangsrundung zum Rillengrund 5 aus.

Jede Querrille 4 weist ebenfalls einen abschnittweise innerhalb und abschnittsweise außerhalb der Bodenaufstandsfläche verlaufenden Rillenabschnitt 4a und einen an das schulterseitige Ende des Rillenabschnittes 4a anschließenden und daher im Schulterabschnitt 1a befindlichen Auslaufabschnitt 4b auf. Der Rillenabschnitt 4a erstreckt sich über zumindest 50%, insbesondere über zumindest 60%, der in Rillenlaufrichtung ermittelten Erstreckungslänge der Querrille 4 und weist einen zumindest den Großteil seiner Erstreckung einnehmenden und innerhalb der Bodenaufstandsfläche befindlichen Hauptabschnitt 4"a sowie beim gezeigten Ausführungsbeispiel einen in Draufsicht unter einem spitzen Winkel zur axialen Richtung verlaufenden abgeknickten laufstreifeninnenseitigen Endabschnitt 4'a auf.

Wie Fig. 1 und Fig. 2 zeigen, ist jede Querrille 4 durch einen Rillengrund 10, zwei Rillenwände 11, 11' und zwei an den radial äußeren Enden der Rillenwände 11, 11' angesetzten Fasen 12, 12' begrenzt. Die Rillenwände 11, 11' schließen im Rillenabschnitt 4a an den Rillengrund 10 an und verlaufen beim gezeigten Ausführungsbeispiel in radialer Richtung, alternativ unter einem von der radialen Richtung vorzugsweise um bis zu 5° abweichenden Winkel. Die Rillenwand 11 läuft am Auslaufabschnitt 4b aus, die Rillenwand 11' erstreckt sich geringfügig in den Auslaufabschnitt 4b hinein (Fig. 1). Der Hauptabschnitt 4"a der Querrille 4 weist zwischen den Rillenwänden 11, 11' ebenfalls eine Breite B₁ (Fig. 1) auf, die am radial inneren Ende der am tiefsten in die Querrille 4 hineinragenden Fase 12, 12' ermittelt wird und 1,5 mm bis 10,0 mm beträgt. Die bevorzugte Breite B₁ der Querrille 4 für Laufstreifen für PKW-Sommerreifen, für Laufstreifen für PKW-Winterreifen und für Laufstreifen für Off-Road-Reifen entsprechen den bereits für die Querrille 3 erwähnten Breiten.

Gemäß Fig. 1 und Fig. 2 ist jeder Auslaufabschnitt 4b im Wesentlichen von einer zur Laufstreifenaußenseite unter kontinuierlicher Verringerung ihrer Tiefe auslaufenden seichten Vertiefung 4'b gebildet, welche in Umfangsrichtung breiter ist als der Rillenabschnitt 4a und beim gezeigten Ausführungsbeispiel, wie die Vertiefung 3'b, die Breite B₂ aufweist.

An der Außenfläche der Profilrippe 1 ist jede Querrille 4 in Umfangsrichtung durch zwei Rillenkanten 13, 13' begrenzt. Die Rillenkante 13' verläuft mit Ausnahme jenes Kantenabschnittes, welcher im bereits erwähnten abgeknickten Endabschnitt 4'a verläuft, in Draufsicht gerade. Die an der Rillenwand 11' angesetzte und zur Rillenkante 13' verlaufende Fase 12' verläuft im Querschnitt zur radialen Richtung unter einem Winkel von 40° bis 50°, insbesondere von 43° bis 47°. Im Auslaufabschnitt 4b verläuft die Fase 12' am Rillengrund 10 der Querrille 4 aus.

Die Rillenkante 13 verläuft über den Großteil der Erstreckung des Rillenabschnittes 4a im Wesentlichen in Erstreckungsrichtung der Querrille 4 und weist einen im Schulterabschnitt 1b der Profilrippe 1 sowie abschnittsweise im Rillenabschnitt 4a und abschnittsweise im Auslaufabschnitt 4b verlaufenden, in Draufsicht langgestreckt S-förmig geschwungenen Kantenabschnitt 13a auf, welcher derart ausgeführt ist, dass sich die Querrille 4, wie bereits erwähnt, zur Außenseite des Schulterabschnittes 1b verbreitert. An das außenseitige Ende des geschwungenen Kantenabschnittes 13a schließt ein Kantenendabschnitt 13b an, welcher in Draufsicht in oder im Wesentlichen in Erstreckungsrichtung der Querrille 4 verläuft. Die durch die Rillenkante 13 an der Außenfläche der Profilrippe 1 begrenzte und an der Rillenwand 11 angesetzte Fase 12 verläuft über die gesamte Erstreckung der Rillenwand 11 und ist zur radialen Richtung unter einem Winkel von 40° bis 50°, insbesondere von 43° bis 47°, geneigt. Die Fase 12 setzt sich aus einem über den Großteil des Rillenabschnittes 4a verlaufenden Fasenhauptabschnitt 12a und einen vom Rillenabschnitt 4a in den Auslaufabschnitt 4b hinein- und im Schulterabschnitt 1b der Profilrippe 1 verlaufenden Fasenendabschnitt 12b zusammen. Der Fasenhauptabschnitt 12a weist, wie der Fasenhauptabschnitt 7a, eine Breite von 0,5 mm bis 1,5 mm auf und erstreckt sich über zumindest 60%, insbesondere über zumindest 70%, der Erstreckungslänge des Rillenabschnittes 4a. Der Fasenendabschnitt 12b verläuft im Auslaufabschnitt 4b zur Vertiefung 4'b sowie zum Rillengrund 10 und ist an der Außenfläche der Profilrippe 1 durch den geschwungenen Kantenabschnitt 13a begrenzt. Im Bereich des Rillenabschnittes 4b weist der Fasenendabschnitt 12b über den Großteil seiner Erstreckung eine Breite von 1,5 mm bis 3,0 mm auf.

Bei dem in Fig. 1 und Fig. 2 gezeigten Ausführungsbeispiel sind die Auslaufabschnitte 3b, 4b von in Umfangsrichtung unmittelbar benachbarten Querrillen 3, 4 in Draufsicht sowie bezogen auf die axiale Richtung gegensinnig zueinander orientiert. Die abgeknickten Endabschnitte 3'a, 4'a von sämtlichen Querrillen 3, 4 erstrecken sich beim gezeigten Ausführungsbeispiel in Draufsicht im Wesentlichen parallel zueinander. Jede Querrille 3, 4 weist durch ihre spezielle Ausgestaltung in Draufsicht eine löffelartige Gestalt auf.

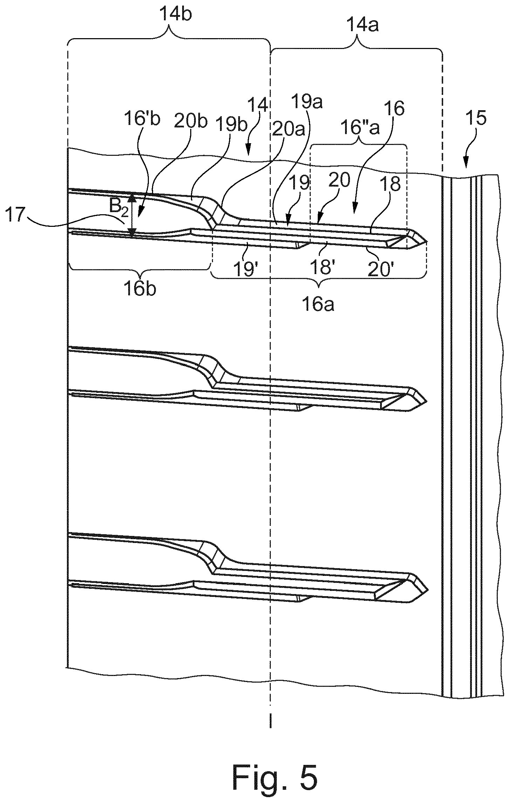

Fig. 5 zeigt eine Draufsicht auf einen Umfangsabschnitt einer schulterseitigen Profilrippe 14, welche eine Variante der Profilrippe 1 ist und laufstreifeninnenseitig durch eine Umfangsrille 15 begrenzt ist. Der laufstreifenaußenseitige Rand der Bodenaufstandsfläche des Laufstreifens ist wieder durch eine gestrichelte Linie 1 gekennzeichnet. Die Profilrippe 14 weist einen innerhalb der Bodenaufstandsfläche befindlichen Umfangsabschnitt 14a und einen außerhalb der Bodenaufstandsfläche befindlichen Schulterabschnitt 14b im "Off-Shoulder"-Bereich auf.

Die Profilrippe 14 ist ferner mit über den Rand der Bodenaufstandsfläche hinausverlaufenden in Draufsicht parallel zueinander sowie zur axialen Richtung unter einem um bis zu 15° abweichenden Winkel verlaufenden Querrillen 16 versehen, die der Profilrippe 14 eine blockartige Struktur verleihen, in einem Abstand vor der Umfangsrille 15 enden, sich bis zur Seitenwand (in Fig. 5 nicht gezeigt) des Reifens erstrecken und an ihrer tiefsten Stelle in radialer Richtung jeweils eine Tiefe von 3,0 mm bis 12,0 mm aufweisen.

Jede Querrille 16 weist einen abschnittweise innerhalb und abschnittsweise außerhalb der Bodenaufstandsfläche verlaufenden Rillenabschnitt 16a und einen im Schulterabschnitt 14b befindlichen Auslaufabschnitt 16b auf. Der Rillenabschnitt 16a erstreckt sich über zumindest 50%, insbesondere über zumindest 60%, der in Rillenlaufrichtung ermittelten Erstreckungslänge der Querrille 16 und weist einen zumindest den Großteil seiner Erstreckung einnehmenden Hauptabschnitt 16"a auf.

Jede Querrille 16 ist durch einen Rillengrund 17, zwei Rillenwände 18, 18' und zwei Fasen 19, 19' begrenzt. Die Rillenwände 18, 18' sind analog zu den bereits beschriebenen Rillenwänden 6, 6', 11, 11' der Querrillen 3, 4 ausgeführt. Der Hauptabschnitt 16"a der Querrille 16 weist zwischen den Rillenwänden 18, 18' ebenfalls die Breite B₁ auf, welche am radial inneren Ende der am tiefsten in die Querrille 16 hineinragenden Fase 19,19' ermittelt wird und 1,5 mm bis 10,0 mm beträgt. Die bevorzugte Breite B₁ der Querrille 16 für Laufstreifen für PKW-Sommerreifen, für Laufstreifen für PKW-Winterreifen und für Laufstreifen für Off-Road-Reifen entsprechen den bereits für die Querrille 3 erwähnten Breiten.

Jeder Auslaufabschnitt 16b ist im Wesentlichen von einer zum Rand des Schulterabschnittes 1b der Profilrippe 1 unter kontinuierlicher Verringerung ihrer Tiefe auslaufenden in Draufsicht in axialer Richtung langgestreckten Vertiefung 16'b gebildet, welche in Umfangsrichtung breiter ist als der Rillenabschnitt 16a und in Umfangsrichtung an ihrer breitesten Stelle die ebenfalls bereits erwähnte Breite B₂ aufweist, die um 40%, insbesondere um 50%, größer ist als die Breite B₁. An ihrem am Rand des Schulterabschnittes 14b schulterseitigen Ende weist die Vertiefung 16' b in radialer Richtung eine Tiefe von 0,0 mm bis 1,0 mm auf. Die Vertiefung 16'b kann daher zur Außenfläche des Schulterabschnittes 1b auslaufen.

An der Außenfläche der Profilrippe 14 ist jede Querrille 16 in Umfangsrichtung durch zwei Rillenkanten 20, 20' begrenzt. Die Rillenkante 20' begrenzt abschnittsweise die Rillenwand 18' sowie die an der Rillenwand 18' ausgebildete Fase 19', welche sich bis zum Rand des Schulterabschnittes 14b und daher bis zur nicht gezeigten Seitenwand erstreckt. Die Rillenwand 18' läuft im Auslaufabschnitt 16b aus, wobei die Fase 19' an dieser Stelle über die Rillenwand 18' hinaus- sowie zur Vertiefung 16'b verläuft. Die Rillenkante 20, welche die an der Rillenwand 18 ausgebildete Fase 19 an der Außenfläche der Profilrippe 14 begrenzt, verläuft über den Großteil der Erstreckung des Rillenabschnittes 16a in Erstreckungsrichtung der Querrille 16 und weist einen außerhalb der Bodenaufstandsfläche sowie abschnittsweise im Rillenabschnitt 16a und abschnittsweise im Auslaufabschnitt 16b verlaufenden in Draufsicht S-förmig geschwungenen Kantenabschnitt 20a auf, sodass sich die Querrille 16 in der erwähnten Weise verbreitert. An das laufstreifenaußenseitige Ende des geschwungenen Kantenabschnittes 20a schließt ein bis zum Rand des Schulterabschnittes 14b verlaufender Kantenendabschnitt 20b an, welcher in Draufsicht in Erstreckungsrichtung der Querrille 16 verläuft. Die Fase 19 verläuft über die gesamte Erstreckung der Querrille 16 und daher bis zum Ende des Schulterabschnittes 14b und weist einen sich im Rillenabschnitt 16a erstreckenden Fasenhauptabschnitt 19a und einen Fasenendabschnitt 19b auf, welcher im Bereich des Auslaufabschnittes 16b zur Vertiefung 16'b verläuft und an der Außenfläche der Profilrippe 14 durch den Kantenendabschnitt 20b sowie zumindest einen Abschnitt des geschwungenen Kantenabschnittes 20a begrenzt ist. Wie in Fig. 5 angedeutet ist, können zwischen der Fase 19, 19' und dem Rillengrund 17 Übergangsrundungen ausgebildet sein.

Gemäß eine bevorzugten Ausführungsvariante ist der Laufstreifen eines erfindungsgemäßen Fahrzeugluftreifens in seiner einen Schulter mit einer Profilrippe 1 und in seiner anderen Schulter mit einer Profilrippe 14 versehen.

### Bezugszeichenliste

- 1: Profilrippe
- 1a: Umfangsabschnitt
- 1b: Schulterabschnitt
- 2: Umfangsrille
- 3, 4: Querrille
- 3a, 4a: Rillenabschnitt
- 3'a, 4'a: Endabschnitt
- 3"a, 4"a: Hauptabschnitt
- 3b, 4b: Auslaufabschnitt
- 3'b, 4'b: seichte Vertiefung
- 5: Rillengrund
- 6, 6': Rillenwand
- 7, 7': Fase
- 7a: Fasenhauptabschnitt
- 7'a: Fasenendabschnitt
- 7b: Fasenendabschnitt
- 8, 8': Rillenkante
- 8'a: Kantenabschnitt
- 8'b: Kantenendabschnitt
- 9: Knickstelle
- 10: Rillengrund
- 11, 11': Rillenwand
- 12, 12': Fase
- 12a: Fasenhauptabschnitt
- 12b: Fasenendabschnitt
- 13, 13': Rillenkante
- 13a: geschwungener Kantenabschnitt
- 13b: Kantenendabschnitt
- 14: Profilrippe
- 14a: Umfangsabschnitt
- 14b: Schulterabschnitt
- 15: Umfangsrille
- 16: Querrille
- 16a: Rillenabschnitt
- 16"a: Hauptabschnitt
- 16b: Auslaufabschnitt
- 16'b: Vertiefung
- 17: Rillengrund
- 18, 18': Rillenwand
- 19, 19': Fase
- 19a: Fasenhauptabschnitt
- 19b: Fasenendabschnitt
- 20, 20': Rillenkante
- 20a: geschwungener Kantenabschnitt
- 20b: Kantenendabschnitt
- b_{F}, b_{F}', b_{F}^{b}: Breite
- B₁, B₂: Breite
- 1: Linie
- T₁: Tiefe
- α', β, β: Winkel

## Patentansprüche

1. Fahrzeugluftreifen in Radialbauart mit einem Laufstreifen mit zumindest einer schulterseitigen Profilrippe (1, 14), welche mit über den seitlichen Rand (1) der Bodenaufstandsfläche des Laufstreifens hinausverlaufenden Querrillen (3, 4, 16) versehen ist, wobei jede Querrille (3, 4, 16) einen Rillengrund (5, 10, 17) und Rillenwände (6, 6', 11, 11', 18, 18') sowie innerhalb der Bodenaufstandsfläche einen Hauptabschnitt (3"a, 4"a, 16"a) mit parallel zueinander verlaufenden Rillenkanten (8, 8', 13, 13', 20, 20') aufweist, wobei der Hauptabschnitt (3"a, 4"a, 16"a) zwischen den Rillenwänden (6, 6') eine Breite (B₁) von 1,5 mm bis 10,0 mm aufweist,
wobei an zumindest einer Rillenwand (6, 6', 11, 11', 18, 18') eine zur Rillenkante (8, 8', 13, 13', 20, 20') verlaufende Fase (7, 7', 12, 12', 19, 19') angesetzt ist und wobei jede Querrille (3, 4, 16) außerhalb der Bodenaufstandsfläche unter kontinuierlicher Verringerung ihrer Tiefe als flächige Vertiefung (3'b, 4'b, 16'b) ausläuft, wobei jede Vertiefung (3'b, 4'b, 16'b) in Umfangsrichtung an ihrer breitesten Stelle eine Breite (B₂) aufweist, welche um mindestens 40% größer ist als die Breite (B₁) des Hauptabschnittes (3"a, 4"a, 16"a) der Querrille (3, 4, 16), und, die Fase(n) in Erstreckungsrichtung der Querrille (3, 4, 16) einen Fasenhauptabschnitt (7a, 12a, 19a) und außerhalb der Bodenaufstandsfläche einen zumindest über den Großteil seiner Erstreckung breiter als der Fasenhauptabschnitt (7a, 12a, 19a) ausgeführten Fasenendabschnitt (7'a, 7b, 12b, 19b) aufweist bzw. aufweisen, **dadurch gekennzeichnet,**
**dass** jeder Fasenendabschnitt (7'a, 7b, 12b, 19b) an der Außenfläche der Profilrippe (1) durch einen Kantenabschnitt (13a, 20a) seiner Rillenkante (8, 13, 20) begrenzt ist, welcher zumindest eine die Querrille (3, 4, 16) verbreiternde Knickstelle (9) aufweist, und wobei jeder Fasenendabschnitt (7'a, 7b, 12b, 19b) entlang der flächigen Vertiefung (3'b, 4'b, 16'b) der Querrille (3, 4, 16) ausläuft.

2. Fahrzeugluftreifen nach Anspruch 1, **dadurch gekennzeichnet, dass** die Tiefe der Vertiefung (3'b, 4'b, 16'b) an ihrem schulterseitigen Ende auf 0,0 mm bis 4,0 mm abnimmt.

3. Fahrzeugluftreifen für einen Personenkraftwagen nach Anspruch 2, **dadurch gekennzeichnet, dass** die Tiefe der Vertiefung (3'b, 4'b, 16'b) an ihrem schulterseitigen Ende auf 0,5 mm bis 1,0 mm abnimmt.

4. Fahrzeugluftreifen nach einem der Ansprüche 1 bis 3, **dadurch gekennzeichnet, dass** die Breite (B₂) der Vertiefung (3'b, 4'b, 16'b) an ihrer breitesten Stelle um mindestens 50%, insbesondere um mindestens 65%, größer ist als die Breite (B₁) des Hauptabschnittes (3"a, 4"a, 16"a) der Querrille (3, 4, 16).

5. Fahrzeugluftreifen nach einem der Ansprüche 1 bis 4, **dadurch gekennzeichnet, dass** der Fasenendabschnitt (7'a, 7b, 12b, 19b) an seiner breitesten Stelle ein Breite (b_{F}^{b}) von 1,5 mm bis 3,0 mm, insbesondere von mindestens 2,5 mm, aufweist.

6. Fahrzeugluftreifen nach einem der Ansprüche 1 bis 5, **dadurch gekennzeichnet, dass** der Fasenhauptabschnitt (7a, 12a, 19a) eine Breite (b_{F}, b_{F}') von 0,5 mm bis 1,5 mm aufweist.

7. Fahrzeugluftreifen nach einem der Ansprüche 1 bis 6, **dadurch gekennzeichnet, dass** der Fasenendabschnitt (12b, 19b) an der Außenfläche der schulterseitigen Profilrippe (1) durch einen in Draufsicht geschwungenen Kantenabschnitt (13a, 20a) der Rillenkante (13, 20) begrenzt ist.

8. Fahrzeugluftreifen nach Anspruch 7, **dadurch gekennzeichnet, dass** der geschwungenen Kantenabschnitt (13a, 20a) in Draufsicht langgestreckt S-förmig geschwungen ist.

9. Fahrzeugluftreifen nach einem der Ansprüche 1 bis 8, **dadurch gekennzeichnet, dass** die flächigen Vertiefungen (16'b) der Querrillen (16) in axialer Richtung langgestreckt sind und bis zur Seitenwand verlaufen.

10. Fahrzeugluftreifen nach einem der Ansprüche 1 bis 9, **dadurch gekennzeichnet, dass** an der zweiten Rillenwand (6', 11', 18') der Querrille (3, 4, 16) ebenfalls eine zur Rillenkante (8', 13', 20') verlaufende Fase (7', 12', 19') angesetzt ist.

11. Fahrzeugluftreifen nach Anspruch 10, **dadurch gekennzeichnet, dass** die Fase (7', 12', 19'), welche an der zweiten Rillenwand (6', 11', 18') angesetzt ist, entlang der flächigen Vertiefung (3'b, 4'b, 16'b) der Querrille (3, 4, 16) ausläuft.

12. Fahrzeugluftreifen nach einem der Ansprüche 1 bis 11, **dadurch gekennzeichnet, dass** die vorgesehene(n) Fase(n) (7, 7', 12, 12', 19, 19'), im Querschnitt betrachtet, zur radialen Richtung unter einem konstanten Winkel von 40° bis 50°, insbesondere von 43° bis 47°, verlaufen.

13. Fahrzeugluftreifen nach einem der Ansprüche 1 bis 12, **dadurch gekennzeichnet, dass** die Querrillen (3, 4) in Draufsicht eine löffelartige Gestalt aufweisen, wobei die Vertiefungen (3'b, 4'b) jeweils den Löffelboden bilden.

14. Fahrzeugluftreifen für einen Personenkraftwagen nach einem der Ansprüche 1 bis 13, **dadurch gekennzeichnet, dass** die Breite (B₁) des Hauptabschnittes (3"a, 4"a, 16"a) zwischen den Rillenwänden (6, 6') für Sommerreifen bis zu 5,0 mm beträgt und für Winterreifen 6,0 mm bis 8,0 mm beträgt.

15. Fahrzeugluftreifen für einen Geländewagen nach einem der Ansprüche 1 bis 13, **dadurch gekennzeichnet, dass** die Breite (B₁) des Hauptabschnittes (3"a, 4"a, 16"a) zwischen den Rillenwänden (6, 6') bis zu 10,0 mm beträgt.

## Claims

1. Vehicle pneumatic tyre of radial design having a tread with at least one profile rib (1, 14) on the shoulder side, which is provided with transverse grooves (3, 4, 16) extending beyond the lateral edge (1) of the ground contact surface of the tread, each transverse groove (3, 4, 16) having a groove base (5, 10, 17) and groove walls (6, 6', 11, 11', 18, 18') and, within the ground contact surface, a main section (3"a, 4"a, 16"a) with groove edges (8, 8', 13, 13', 20, 20') extending parallel to one another, the main section (3"a, 4"a, 16"a) having a width (B₁) of 1.5 mm to 10.0 mm between the groove walls (6, 6'),
a chamfer (7, 7', 12, 12', 19, 19') extending to the groove edge (8, 8', 13, 13', 20, 20') being set on at least one groove wall (6, 6', 11, 11', 18, 18')
and each transverse groove (3, 4, 16) outside the ground contact surface running out as a flat depression (3'b, 4'b, 16'b) with a continuous reduction in its depth, each depression (3'b, 4'b, 16'b) having at its widest point a width (B₂) in the circumferential direction which is at least 40% greater than the width (B₁) of the main section (3"a , 4"a, 16"a) of the transverse groove (3, 4, 16), and
the chamfer(s) having, in the extension direction of the transverse groove (3, 4, 16), a main chamfer section (7a, 12a, 19a) and, outside the ground contact surface, a chamfer end section (7'a, 7b, 12b, 19b) that is configured so as to be wider than the main chamfer section (7a, 12a, 19a), at least over the majority of its extent,
**characterized in that**
each chamfer end section (7'a, 7b, 12b, 19b) is delimited on the outer surface of the profile rib (1) by an edge section (13a, 20a) of its groove edge (8, 13, 20), which has at least one kink (9) widening the transverse groove (3, 4, 16), and wherein each chamfer end section (7'a, 7b, 12b, 19b) runs out along the flat depression (3'b, 4'b, 16'b) of the transverse groove (3, 4, 16).

2. Vehicle pneumatic tyre according to Claim 1, **characterized in that** the depth of the depression (3'b, 4'b, 16'b) at its end on the shoulder side decreases to 0.0 mm to 4.0 mm.

3. Vehicle pneumatic tyre for a passenger car according to Claim 2, **characterized in that** the depth of the depression (3'b, 4'b, 16'b) at its end on the shoulder side decreases to 0.5 mm to 1.0 mm.

4. Vehicle pneumatic tyre according to one of Claims 1 to 3, **characterized in that** the width (B₂) of the depression (3'b, 4'b, 16'b) at its widest point is at least 50% greater, in particular at least 65% greater, than the width (B₁) of the main section (3"a, 4"a, 16"a) of the transverse groove (3, 4, 16) .

5. Vehicle pneumatic tyre according to one of Claims 1 to 4, **characterized in that** the chamfer end section (7'a, 7b, 12b, 19b) at its widest point has a width (b_{F}^{b}) of 1.5 mm to 3.0 mm, in particular of at least 2.5 mm.

6. Vehicle pneumatic tyre according to one of Claims 1 to 5, **characterized in that** the chamfer main section (7a, 12a, 19a) has a width (b_{F}, b_{F}') of 0.5 mm to 1.5 mm.

7. Vehicle pneumatic tyre according to one of Claims 1 to 6, **characterized in that** the chamfer end section (12b, 19b) on the outer surface of the profile rib (1) on the shoulder side is delimited by an edge section (13a, 20a) of the groove edge (13, 20) that is curved in plan view.

8. Vehicle pneumatic tyre according to Claim 7, **characterized in that** the curved edge section (13a, 20a) is curved in an elongated S shape in plan view.

9. Vehicle pneumatic tyre according to one of Claims 1 to 8, **characterized in that** the flat depressions (16'b) of the transverse grooves (16) are elongated in the axial direction and extend as far as the side wall.

10. Vehicle pneumatic tyre according to one of Claims 1 to 9, **characterized in that** a chamfer (7', 12', 19') extending to the groove edge (8', 13', 20') is likewise set on the second groove wall (6', 11', 18') of the transverse groove (3, 4, 16).

11. Vehicle pneumatic tyre according to Claim 10, **characterized in that** the chamfer (7', 12', 19'), which is set on the second groove (6', 11', 18'), runs out along the flat depression (3'b, 4'b, 16'b) of the transverse groove (3, 4, 16).

12. Vehicle pneumatic tyre according to one of Claims 1 to 11, **characterized in that** the chamfer(s) (7, 7', 12, 12', 19, 19') that are provided, viewed in cross section, extend relative to the radial direction at a constant angle of 40° to 50°, in particular of 43° to 47°.

13. Vehicle pneumatic tyre according to one of Claims 1 to 12, **characterized in that** in plan view, the transverse grooves (3, 4) have a spoon-like shape, wherein the depressions (3'b, 4'b) each form the bottom of the spoon.

14. Vehicle pneumatic tyre for a passenger car according to one of Claims 1 to 13, **characterized in that** the width (B₁) of the main section (3"a, 4"a, 16"a) between the groove walls (6, 6') for summer tyres is up to 5.0 mm and for winter tyres is 6.0 mm to 8.0 mm.

15. Vehicle pneumatic tyre for an off-road vehicle according to one of Claims 1 to 13, **characterized in that** the width (B₁) of the main section (3"a, 4"a, 16"a) between the groove walls (6, 6') is up to 10.0 mm.

## Revendications

1. Pneumatique de véhicule de construction radiale comprenant une bande de roulement comportant au moins une nervure profilée (1, 14) côté épaulement, laquelle est dotée de rainures transversales (3, 4, 16) s'étendant au-delà du bord latéral (1) de la surface d'appui au sol de la bande de roulement, chaque rainure transversale (3, 4, 16) comprenant un fond de rainure (5, 10, 17) et des parois de rainure (6, 6', 11, 11', 18, 18') ainsi qu'une partie principale (3"a, 4"a, 16"a) dotée d'arêtes de rainure (8, 8', 13, 13', 20, 20') s'étendant parallèlement les unes aux autres à l'intérieur de la surface d'appui au sol, la partie principale (3"a, 4"a, 16"a) présentant, entre les parois de rainure (6, 6'), une largeur (B₁) de 1,5 mm à 10,0 mm,
un biseau (7, 7', 12, 12', 19, 19') s'étendant vers l'arête de rainure (8, 8', 13, 13', 20, 20') étant réalisé au niveau d'au moins une paroi de rainure (6, 6', 11, 11', 18, 18') et chaque rainure transversale (3, 4, 16) se terminant, à l'extérieur de la surface d'appui au sol, avec réduction continue de sa profondeur, sous forme d'évidement plan (3'b, 4'b, 16'b), chaque évidement (3'b, 4'b, 16'b) présentant dans la direction périphérique, au niveau de son point le plus large, une largeur (B₂), laquelle est supérieure d'au moins 40% à la largeur (B₁) de la partie principale (3"a, 4"a, 16"a) de la rainure transversale (3, 4, 16), et
le(s) biseau(x) comprenant, dans la direction d'étendue de la rainure transversale (3, 4, 16), une partie principale de biseau (7a, 12a, 19a) et, à l'extérieur de la surface d'appui au sol, une partie d'extrémité de biseau (7'a, 7b, 12b, 19b) réalisée de manière plus large que la partie principale de biseau (7a, 12a, 19a) au moins sur la majeure partie de son étendue,
**caractérisé en ce que**
chaque partie d'extrémité de biseau (7'a, 7b, 12b, 19b) est limitée, au niveau de la surface extérieure de la nervure profilée (1), par une partie d'arête (13a, 20a) de son arête de rainure (8, 13, 20), laquelle partie d'arête comprend au moins un point d'inflexion (9) élargissant la rainure transversale (3, 4, 16), et chaque partie d'extrémité de biseau (7'a, 7b, 12b, 19b) se terminant le long de l'évidement plan (3'b, 4'b, 16'b) de la rainure transversale (3, 4, 16).

2. Pneumatique de véhicule selon la revendication 1, **caractérisé en ce que** la profondeur de l'évidement (3'b, 4'b, 16'b) au niveau de son extrémité côté épaulement diminue jusqu'à 0,0 mm à 4,0 mm.

3. Pneumatique de véhicule pour une voiture particulière selon la revendication 2, **caractérisé en ce que** la profondeur de l'évidement (3'b, 4'b, 16'b) au niveau de son extrémité côté épaulement diminue jusqu'à 0,5 mm à 1,0 mm.

4. Pneumatique de véhicule selon l'une des revendications 1 à 3, **caractérisé en ce que** la largeur (B₂) de l'évidement (3'b, 4'b, 16'b) au niveau de son point le plus large est supérieure d'au moins 50%, en particulier d'au moins 65%, à la largeur (B₁) de la partie principale (3"a, 4"a, 16"a) de la rainure transversale (3, 4, 16).

5. Pneumatique de véhicule selon l'une des revendications 1 à 4, **caractérisé en ce que** la partie d'extrémité de biseau (7'a, 7b, 12b, 19b) présente, au niveau de son point le plus large, une largeur (b_{F}^{b}) de 1,5 mm à 3,0 mm, en particulier d'au moins 2,5 mm.

6. Pneumatique de véhicule selon l'une des revendications 1 à 5, **caractérisé en ce que** la partie principale de biseau (7a, 12a, 19a) présente une largeur (b_{F}, b_{F}') de 0,5 mm à 1,5 mm.

7. Pneumatique de véhicule selon l'une des revendications 1 à 6, **caractérisé en ce que** la partie d'extrémité de biseau (12b, 19b) est limitée, au niveau de la surface extérieure de la nervure profilée (1) côté épaulement, par une partie d'arête (13a, 20a), incurvée en vue de dessus, de l'arête de rainure (13, 20).

8. Pneumatique de véhicule selon la revendication 7, **caractérisé en ce que** la partie d'arête incurvée (13a, 20a) est incurvée en forme de S de manière allongée en vue de dessus.

9. Pneumatique de véhicule selon l'une des revendications 1 à 8, **caractérisé en ce que** les évidements plans (16'b) des rainures transversales (16) sont allongés dans la direction axiale et s'étendent jusqu'à la paroi latérale.

10. Pneumatique de véhicule selon l'une des revendications 1 à 9, **caractérisé en ce qu'**un biseau (7', 12', 19') s'étendant jusqu'à l'arête de rainure (8', 13', 20') est également réalisé sur la deuxième paroi de rainure (6', 11', 18') de la rainure transversale (3, 4, 16) .

11. Pneumatique de véhicule selon la revendication 10, **caractérisé en ce que** le biseau (7', 12', 19') qui est réalisé sur la deuxième paroi de rainure (6', 11', 18') se termine le long de l'évidement plan (3'b, 4'b, 16'b) de la rainure transversale (3, 4, 16).

12. Pneumatique de véhicule selon l'une des revendications 1 à 11, **caractérisé en ce que** le(s) biseau(x) prévu(s) (7, 7', 12, 12', 19, 19') s'étendent, considéré(s) en section transversale, suivant un angle constant de 40° à 50°, en particulier de 43° à 47°, par rapport à la direction radiale.

13. Pneumatique de véhicule selon l'une des revendications 1 à 12, **caractérisé en ce que** les rainures transversales (3, 4) présentent une configuration de type cuillère en vue de dessus, les évidements (3'b, 4'b) formant respectivement les fonds de cuillère.

14. Pneumatique de véhicule pour une voiture particulière selon l'une des revendications 1 à 13, **caractérisé en ce que** la largeur (B₁) de la partie principale (3"a, 4"a, 16"a) entre les parois de rainure (6, 6') est inférieure ou égale à 5,0 mm pour les pneumatiques d'été et comprise entre 6,0 mm et 8,0 mm pour les pneumatiques d'hiver.

15. Pneumatique de véhicule pour un véhicule tout-terrain selon l'une des revendications 1 à 13, **caractérisé en ce que** la largeur (B₁) de la partie principale (3"a, 4"a, 16"a) entre les parois de rainure (6, 6') est inférieure ou égale à 10,0 mm.
